# EUROPÄISCHE PATENTSCHRIFT

(11) **EP 1 739 314 B1**
(45) Veröffentlichungstag und Bekanntmachung des Hinweises auf die Patenterteilung: **12.12.2007**
(21) Anmeldenummer: 06112712.2
(22) Anmeldetag: 18.04.2006
(51) Int. Cl.: F16B 5/02, H04M 1/02

(54) **Gehäuse**
Housing
Boîtier

(30) Priorität: 30.06.2005 DE 102005030596
(43) Veröffentlichungstag der Anmeldung: 03.01.2007
(73) Patentinhaber: Siemens Home and Office Communication Devices GmbH & Co. KG, 81541 München (DE)
(72) Erfinder: Elting, Ralf, 46499, Hamminkeln (DE); Kaiser, Jürgen, 46485, Wesel (DE)
(74) Vertreter: Berg, Peter

(56) Entgegenhaltungen:
- EP-A- 0 373 505
- US-A1- 2002 076 264

## Beschreibung

Die Erfindung betrifft ein Gehäuse gemäß dem Oberbegriff des Anspruchs 1. Aus der US 2002/076 264 A1 ist ein Gehäuse umfassend oberes und unteres Gehäuseteil sowie Verbindungsmittel aus Schraubdomen und Schrauben bekannt.

Bisher wurden die Gehäusen von zum Beispiel Ladeschalen für Funk basierte Telefone ausschließlich aus Kunststoff gefertigt.

Nachteilig bei solchen Gehäusen ist ihr geringes Gewicht. Es kann daher bei einem Herausnehmen eines zum Beispiel in eine solche Ladeschale eingesteckten Funk basierten Telefons passieren, dass ohne zusätzliche Maßnahmen das Ladeschalen-Gehäuse wegen der in den elektrischen Verbindungskontakten zwischen dem Funk basierten Telefon und der Ladeschale vorherrschenden Kräften mit angehoben wird und sich das Ladeschalen-Gehäuse nicht von dem heraus zu nehmenden Funk basierten Telefon löst.

Zur Verhinderung eines solchen Effekts können in dem Gehäuse zusätzliche separate Gewichte installiert sein. Zusätzliche separate Gewichte erfordern aber zusätzlichen Einbauraum. Um diesen bereit zu stellen, ist das Gehäuse entsprechend vergrößert zu dimensionieren. Die zusätzlichen separaten Gewichte erfordern weiter zusätzliches separates Gewichtsmaterial, das bereit zu stellen und zu bezahlen ist. Außerdem erfordern die zusätzlichen separaten Gewichte zusätzliche Montageschritte für deren Montage. Insgesamt erhöht sich der gesamte Herstellungsaufwand für die Herstellung möglichst kleiner und trotzdem brauchbar gewichtiger Gehäusen durch die Verwendung zusätzlicher separater Gewichte wesentlich.

Aufgabe der vorliegenden Erfindung ist es, ausgehend von einem Gehäuse der eingangs genannten Art ein solches Gehäuse in der Weise technisch zu verbessern, dass für manche Anwendungsfälle ein möglichst kleines und trotzdem brauchbar gewichtiges Gehäuse zur Verfügung steht, das in seinen gesamten Herstellungskosten trotzdem preisgünstig ist.

Diese Aufgabe wird erfindungsgemäß durch ein Gehäuse gelöst, das die Merkmale im kennzeichnenden Teil des Anspruchs 1 aufweist.

Danach ist das obere Gehäuseteil ein Zink-Druckgussteil, das in sich gewichtig ist, so dass ein mit einem solchen oberen Gehäuseteil hergestelltes Gehäuse ohne zusätzliche separate Gewichte gewichtig ist. Zusätzliche separate Gewichte können daher zur Herstellung eines gewichtigen Gehäuses entfallen. Es wird kein Raum mehr für zusätzliche Gewichte benötigt, so dass das Gehäuse entsprechend minimiert hergestellt werden kann. Da die zusätzlichen separaten Gewichte entfallen, entfallen auch die Kosten für das Vorsehen solcher zusätzlicher separater Gewichte. Außerdem entfällt auch der Montageaufwand mit allen weiteren Konsequenzen für das Montieren dieser zusätzlichen separaten Gewichte. Das Ergebnis ist ein Gehäuse, das kostengünstig, einfach und minimiert hergestellt werden kann. Trotzdem ist das Gehäuse gewichtig genug, um zumindest in manchen Anwendungsfällen, beispielsweise in Fällen, wie sie oben beschrieben sind, zu verhindern, dass das Gehäuse in leichter Weise mit angehoben wird. Darüber hinaus weist ein derartiges Gehäuse die Vorteile auf, dass es besonders widerstandsfähig ist und optisch eine besonders hohe Qualität ausstrahlt.

Für die einfache und kostengünstige Herstellbarkeit des Gehäuses ist auch verantwortlich, dass die Schraubdome ohne eigenes Gewinde auskommen und als Schrauben Standardschrauben verwendbar sind. Es werden also keine extra angepasst gefertigten Spezialschrauben benötigt.

Verantwortlich hierfür ist die spezielle Konstruktion der Schraubdome, gemäß der die Innenöffnungen der Schraubdome in der Weise ausgebildet sind, dass sie sich zum freien Ende der Schraubdome hin im Winkel größenordnungsmäßig von 0,4 Grad erweitern und dass sie unter Berücksichtigung der möglichen Toleranzen bezüglich des Außendurchmessers der Schrauben und der Innendurchmesser der Innenöffnungen einen Innendurchmesser haben, der einen Wert größenordnungsmäßig zwischen 89% und 98% des Außendurchmessers der Schrauben beträgt.

Die sich zum freien Ende der Schraubdome hin im vorgegebenen Winkel öffnenden Innenöffnungen der Schraubdome haben insbesondere den Vorteil, dass sich die Schrauben leichter einphasen lassen, dass sich die Schrauben dann beim Eindrehen zunehmend stärker einkrallen und dass sich das zu Grunde liegende Zink-Druckgussteil bei seiner Herstellung aus dem entsprechenden Herstellungswerkzeug noch entformen lässt.

Vorteilhafte Ausgestaltungen der Erfindung sind Gegenstand von Unteransprüchen.

Geschlitzte Schraubdome haben gegenüber nicht geschlitzten Schraubdomen den Vorteil, dass ihre Innenöffnungen bei der Herstellung sicher offen gehalten werden, weil bei Spülvorgängen während der Herstellung des Zink-Druckgussteils die Innenöffnungen der Schraubdome sicher durchspült werden. Bei nicht geschlitzten Schraubdomen besteht die Gefahr, dass das Spülmittel nicht in die Innenöffnungen der Schraubdome gelangt, weswegen sich dann die Innenöffnungen bei der Herstellung zusetzen können.

Besonders Vorteil des erfindungsgemäßen Gehäuses ist, dass es beispielsweise als Ladeschale für Funk basierte Telefone dienen kann, weil es genügend gewichtig ist, so dass es zu keinem Anheben des als Ladeschale ausgebildeten Gehäuses auf Grund der zwischen den elektrischen Kontaktstellen zwischen dem eingesteckten Funk basierten Telefon und der Ladeschale vorherrschenden Kontaktkräften beim Herausnehmen des Funk basierten Telefons aus der Ladeschale kommt.

Nachfolgend wird ein Ausführungsbeispiel der Erfindung anhand einer Zeichnung näher erläutert. Darin zeigen:
- Figur 1: ein in Kunststoff gefertigtes oberes Gehäuseteil gemäß dem Stand der Technik,
- Figur 2: ein als Zink-Druckgussteil gefertigtes oberes Gehäuseteil gemäß der Erfindung, und
- Figur 3: ein Beispiel für eine dem Stand der Technik entnommene Standardschraube für die Befestigung eines unteren Gehäuseteils gemäß dem Stand der Technik mit einem oberen Gehäuseteil gemäß der Figur 2.

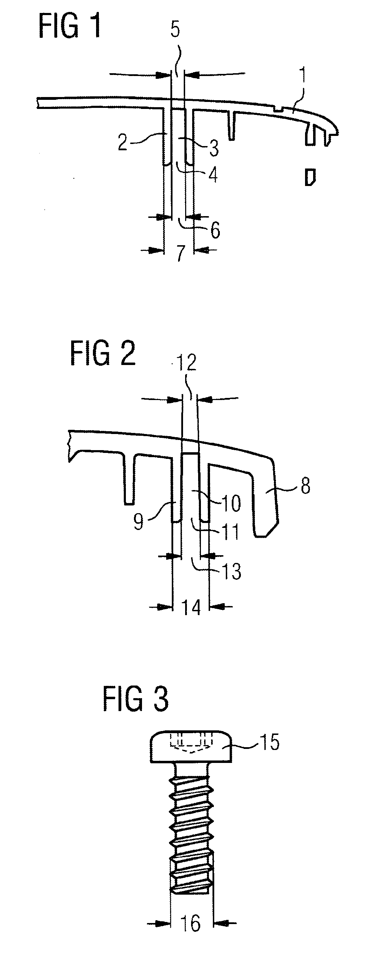

Das in der Figur 1 gezeigte obere Gehäuseteil 1, das aus Kunststoff besteht, zeigt insbesondere einen Schraubdom 2 ohne inneres Gewinde. Der Schraubdom 2 weist eine Innenöffnung 3 auf, die sich zum freien Ende 4 des Schraubdoms 2 hin mit einem öffnenden Winkel 5 erweitert. Der Winkel 5 beträgt größenordnungsmäßig 0,7 Grad.

Der Innendurchmesser 6 des Schraubdoms 2 beträgt in dem hier gezeigten Ausführungsbeispiel 2,35 +/-0,1 mm. Der Vollständigkeit wegen ist in der Figur 1 auch ein Außendurchmesser 7 gezeigt, der in dem hier vorliegenden Ausführungsbeispiel mit 5,15 mm gewählt ist.

Das in der Figur 2 gezeigte obere Gehäuseteil 8, das ein Zink-Druckgussteil ist, zeigt insbesondere einen Schraubdom 9, wieder ohne inneres Gewinde. Der Schraubdom 9 weist eine Innenöffnung 10 auf, die sich zum freien Ende 11 des Schraubdoms 9 hin mit einem öffnenden Winkel 12 erweitert. Der Winkel 12 beträgt größenordnungsmäßig 0,4 Grad.

Der Innendurchmesser 13 des Schraubdoms 9 beträgt in dem hier gezeigten Ausführungsbeispiel 2,65 +/-0,05 mm. Wieder der Vollständigkeit wegen ist in der Figur 2 auch ein Außendurchmesser 14 gezeigt, der in dem hier vorliegenden Ausführungsbeispiel mit 5,17 mm gewählt ist.

Angemerkt an dieser Stelle ist, dass die Toleranz des Innendurchmessers 13 des Schraubdoms 9 in der Figur 2 gegenüber der Figur 1 wesentlich enger gewählt ist. Dies ist möglich, weil sich die Toleranzen bei der Herstellung eines Metallteils feiner einstellen lassen als bei der Herstellung eines Kunststoffteils.

In der Figur 3 ist eine Standardschraube15 gezeigt, bei der es sich in dem hier gezeigten Ausführungsbeispiel um eine so genannte EJOT TORX^{®} T10-Schraube handelt, die einen Außendurchmesser 16 von 2,9 -0,14 mm hat.

Auf der Grundlage der oben angegebenen Abmessungen beträgt unter Berücksichtigung der möglichen Toleranzen bei Vorhandensein des kleinstmöglichen Innendurchmessers 10 des Schraubdoms 9 und größtmöglichen Außendurchmessers 16 der Schraube 15 der Innendurchmesser 10 des Schraubdoms 9 89% des Außendurchmessers 15 der Schraube 15. Bei Vorhandensein des größtmöglichen Innendurchmessers 10 des Schraubdoms 9 und des kleinstmöglichen Außendurchmessers 16 der Schraube 15 beträgt der Innendurchmesser 10 des Schraubdoms 9 98% des Außendurchmessers 16 der Schraube 15.

## Patentansprüche

1. Gehäuse, umfassend ein oberes (8) und ein unteres Gehäuseteil und umfassend für eine Verbindung der beiden Gehäuseteile Verbindungsmittel, die aus Schraubdomen (9) mit sich zum freien Ende hin erweiternden Innenöffnung (10) im oberen Gehäuseteil (8) und durch Bohrungen im unteren Gehäuseteil greifende und in die Schraubdome (9) des oberen Gehäuseteils (8) reichende Schrauben (15) bestehen, **dadurch gekennzeichnet, dass** das obere Gehäuseteil (8) ein Zink-Druckgussteil ist, dass die Schraubdome (9) ohne eigenen Gewindegang sind, dass die Innenöffnungen (10) der Schraubdome (9) zum freien Ende (11) der Schraubdome (9) hin sich in einem Winkel (12) größenordnungsmäßig von 0,4 Grad erweiternd ausgebildet sind, dass die Schrauben (15) Standardschrauben sind, und dass der Innendurchmesser (13) der Schraubdome (9) unter Berücksichtigung der möglichen Toleranzen bezüglich des Außendurchmessers (16) der Schrauben (15) und der Innendurchmesser (13) der Innenöffnungen (10) der Schraubdome (9) größenordnungsmäßig zwischen 89% und 98% des Außendurchmessers (16) der Schrauben (15) gewählt ist.

2. Gehäuse nach Anspruch 1, **dadurch gekennzeichnet, dass** wenigstens ein einziger der Schraubdome (9) geschlitzt ausgebildet ist.

3. Gehäuse nach Anspruch 1 oder 2, **dadurch gekennzeichnet, dass** das Gehäuse als eine Ladeschale für ein Funk basiertes Telefon ausgebildet ist.

## Claims

1. Housing, comprising an upper (8) and a lower housing part and comprising connecting means for connecting the two housing parts, which consist of screw bosses (9) with an inner opening widening out towards the free end (10) in the upper housing part (8) and screws (15) engaging through holes in the lower housing part reaching into the screw boss (9) of the upper housing part (8), **characterised in that** the upper housing part (8) is a diecast zinc part, that the screw bosses (9) do not have their own threads, that the inner openings (10) of the screw bosses (9) are embodied to open out towards the free end (11) of the screw boss (9) at an angle (12) of the order of magnitude of 0.4 degrees, that the screws (15) are standard screws and that the internal diameter (13) of the screw bosses (9) taking account of the possible tolerances, is chosen in relation to the external diameter (16) of the screws (15) and the internal diameter (13) of the inner openings (10) of the screw bosses (9) to be of an order of magnitude of between 89% and 98% of the external diameter (16) of the screws (15).

2. Housing according to claim 1, **characterised in that** at least one single screw boss (9) is embodied slotted.

3. Housing according to claim 1 or 2, **characterised in that** the housing is embodied as a charging cradle for a radio-based telephone.

## Revendications

1. Boîtier comprenant une partie supérieure (8) et une partie inférieure de boîtier et comprenant, pour une liaison des deux parties de boîtier, des moyens de liaison qui sont constitués de dômes de vis (9), munis d'une ouverture intérieure (10), s'élargissant vers l'extrémité libre, dans la partie supérieure de boîtier (8) et de vis (15) ayant prise dans la partie inférieure de boîtier au moyen d'alésages et arrivant dans les dômes de vis (9) de la partie supérieure de boîtier (8), **caractérisé en ce que** la partie supérieure de boîtier (8) est une pièce à base de zinc coulée sous pression, **en ce que** les dômes de vis (9) sont sans propre pas de vis, **en ce que** les ouvertures intérieures (10) des dômes de vis (9), en direction de l'extrémité libre (11) des dômes de vis (9), sont exécutées dans un angle (12) s'élargissant dans l'ordre de grandeur de 0,4 degré, **en ce que** les vis (15) sont des vis standard, et **en ce que** le diamètre intérieur (13) des dômes de vis (9), en tenant compte des tolérances possibles en ce qui concerne le diamètre extérieur (16) des vis (15) et le diamètre intérieur (13) des ouvertures intérieures (10) des dômes de vis (9), est sélectionné dans un ordre de grandeur compris entre 89% et 98% du diamètre extérieur (16) des vis (15).

2. Boîtier selon la revendication 1, **caractérisé en ce qu'**au moins un seul des dômes de vis (9) est exécuté de manière fendue.

3. Boîtier selon la revendication 1 ou 2, **caractérisé en ce que** le boîtier est exécuté en tant que coque de chargement pour un téléphone basé radio.
